Europäisches Patentamt

European Patent Office

Office européen des brevets

(11) Veröffentlichungsnummer: **0 268 576**
A2

## (12) EUROPÄISCHE PATENTANMELDUNG

(21) Anmeldenummer: 87890256.8

(22) Anmeldetag: 16.11.87

(51) Int. Cl.4: **B 32 B 29/02**
B 32 B 15/12

(30) Priorität: 18.11.86 AT 3072/86

(43) Veröffentlichungstag der Anmeldung:
25.05.88 Patentblatt 88/21

(84) Benannte Vertragsstaaten: **DE FR GB IT**

(71) Anmelder: **Lenzing Aktiengesellschaft**
**A-4860 Lenzing (AT)**

(72) Erfinder: **Dressler, Gerhard, Ing.**
**Am Sonnenhang 4**
**A-4860 Lenzing (AT)**

**Reinmüller, Reinhard, Dipl.-Ing.**
**Stelzhamerstrasse 2**
**A-4850 Timelkam (AT)**

**Sasshofer, Franz, Dr.**
**Litzlberg 110**
**A-4863 Seewalchen (AT)**

(74) Vertreter: **Wolfram, Gustav, Dipl.-Ing.**
**Schwindgasse 7 P.O. Box 205**
**A-1041 Wien (AT)**

(54) **Mehrlagiges Verbundmaterial für Verpackungszwecke sowie Verfahren zur Herstellung eines solchen Verbundmaterials.**

(57) Um Schäden an verpackten - insbesondere in komprimiertem Zustand verpackten - Gütern zu vermeiden, wird ein Verbundmaterial vorgesehen, das aus zwei Außenlagen (1a, 1b) aus Karton und mindestens einer Innenlage (2) aus einem textilen Flächengebilde aufgebaut ist, welche Lagen vollflächig miteinander verbunden sind.

Das Verbundmaterial eignet sich vor allem zur Herstellung formstabiler Verpackungseinheiten durch Verkleben, es weist gleichzeitig hohes Dehnungsvermögen, hohe Zug-, Durchstoß-, Weiterreiß- und Naßfestigkeit auf und ist licht- und gegebenenfalls aromaundurchlässig.

Das Verbundmaterial wird zweckmäßig hergestellt, indem die einzelnen Lagen (1a, 1b, 2) durch Extrusionskaschieren jeweils mittels einer Schicht (3a, 3b) aus thermoplastischem Kunststoff miteinander verbunden werden.

FIG. 1

EP 0 268 576 A2

**Beschreibung**

Mehrlagiges Verbundmaterial für Verpackungszwecke sowie Verfahren zur Herstellung eines solchen Verbundmaterials

Die Erfindung betrifft ein mehrlagiges Verbundmaterial zur Verpackung von komprimierten, Rückstelldrucke aufweisenden Gütern, sowie ein Verfahren zur Herstellung eines solchen Verbundmaterials.

Üblicherweise werden - beispielsweise zum Verpacken von Gütern, welche aus Gründen der Raumersparnis komprimiert werden, wie Faser- und Schaumstoffprodukten - u.a. Materialien aus Karton und Wellpappe eingesetzt, welche in Form von Zuschnitten zu Boden-, Deckel- und Seitenteilen konfektioniert werden, so daß nach Komprimieren von z.B. Faserkabeln in hydraulischen Pressen und Umhüllen des komprimierten Gutes mit den Zuschnitten eine quaderförmige Verpackungseinheit mit Kantenlängen zwischen 0,5 und 2,0 m gebildet wird, wobei die Boden- und Deckelteile an den Überlappungsbereichen mit den Seitenteilen verklebt werden. Bei der Verpackung solcher Güter treten bereits unmittelbar nach der Verklebung bei Entlastung der hydraulischen Pressen Rückstellkräfte um 0,5 bar auf, wodurch Zugbelastungen um 20 N/cm auf die Verklebung und das Verpackungsmterial einwirken. Die Anforderungen an Verklebbarkeit und Festigkeit werden durch Verwendung von Karton und Wellpappe mit entsprechend hohem Flächengewicht erfüllt. Unter Karton wird ein aus Papierstoff bestehender flächiger Werkstoff verstanden, der in seinen Eigenschaften zwischen Papier und Pappe liegt; er ist steifer als Papier und wird im allgemeinen aus höherwertigen Stoffen hergestellt als Pappe. Begriffsbestimmungen finden sich beispielsweise in der DIN 6730 (Oktober 1971). Zur Erzielung eines gegebenenfalls zusätzlich erforderlichen Aromaschutzes wird eine Innenverpackung, bestehend z.B. aus Papier/Aluminiumverbunden, vorgesehen.

Es ist auch bekannt, Stapelfasern in Form von Ballen zu komprimieren und in beschichtete Gewebe zu verpacken, wobei die auftretenden Rückstellkräfte durch Umreifung der Ballen mit Stahlbändern aufgenommen werden. Durch Verwendung von Geweben mit großem Arbeits-(Dehnungs-) vermögen werden hohe Durchstoß- und Weiterreißfestigkeiten erreicht. Dadurch werden Transport- und Manipulationsschäden weitgehend vermieden. Darüber hinaus ist das verpackte Gut vor Feuchtigkeitseinflüssen geschützt.

Weiters ist es bekannt, zur Verpackung von Schüttgütern flexible Papier-Gewebeverbunde zu verwenden. Dabei gewährleistet die Papierkomponente Zugfestigkeit. Lichtdichtheit und Verklebbarkeit und die Gewebekomponente Durchstoß-, Weiterreiß- und Schockfestigkeit.

Bei der Verwendung von Verpackungsmaterialien aus Karton und Wellpappe treten häufig Schäden während des Transportes und der Lagerung auf, die durch die bekannt geringe Stoß- und Weiterreißfestigkeit lignocellulosischer Werkstoffe bedingt sind. Ein weiterer Nachteil besteht darin, daß eine solche Verpackung feuchtigkeitsempfindlich ist, daher nur geringe Naßfestigkeit aufweist und auch das Füllgut nur unzureichend vor Feuchtigkeit schützt. Als Folge dieser Schäden ist zumindest eine Neuverpackung vorzunehmen, häufig hat auch das verpackte Gut gelitten. Im Fall von verpackten Fasern kann eine Regenerierung der Fasern notwendig sein oder die Fasern können für eine Weiterverarbeitung überhaupt unbrauchbar geworden sein. Zum Erreichen eines Aromaschutzes ist die Verwendung einer zusätzlichen inneren Verpackung aus aromadichten, ein- oder mehrlagigen Materialien, die z.B. Aluminiumfolien enthalten können, unbedingt erforderlich. Dies bedeutet zusätzlichen Arbeits- und Kostenaufwand.

Bei Einsatz von beschichteten Geweben zur Verpackung von beispielsweise Fasern werden die oben beschriebenen Nachteile bezüglich Stoßfestigkeit, Weiterreißfestigkeit und Feuchtigkeit zwar vermieden, jedoch kommt es wegen der Notwendigkeit von Umreifungsbändern, die die Aufgabe haben, die Verpackung zu schließen und die Rückstellkräfte der komprimierten Fasern aufzunehmen, infolge der hohen Dehnung der Gewebe zu Einschnürungen im Bereich der Umreifungsbänder. Bei der Verpackung von Faserkabeln, wie sie z.B. für die Herstellung von Zigarettenfiltern benötigt werden, können die Einschnürungen Knickstellen und Verfilzungen im Faserkabel verursachen, so daß ein kontinuierliches Abarbeiten des Faserkabels nicht mehr möglich ist. Durch die Verwendung einer entsprechend hohen, die Festigkeitsanforderungen weit übersteigenden Anzahl von Umreifungsbändern können solche Einschnürungen weitgehend vermiedn werden.

Beschichtete Gewebe aus Polyolefinen weisen zwar im Vergleich zu Papier und Karton sowie zu anderen Kunststoffen sehr gute Wasserdampfdichte auf, für den Aromaschutz von geschmacks- und geruchsempfindlichen Gütern sind die Sperreigenschaften jedoch zu gering.

Bekannte Verbundmaterialien aus Gewebe und Papier werden für flexible Verpackungen von Schüttgütern, z.B. in Form von Säcken, ausschließlich für Füllmengen unter 100 kg eingesetzt. Aufgrund ihrer hohen Flexibilität sind diese Verbunde für die Herstellung von formbeständigen, quaderförmigen Verpackungseinheiten ungeeignet. Darüber hinaus können die Ansprüche an Festigkeit, Verklebbarkeit und Aromadichte nicht erfüllt werden.

Die Erfindung stellt sich die Aufgabe, die geschilderten Unzukömmlichkeiten bekannter Verpackungsmaterialien zu überwinden und ein Verbundmaterial zu schaffen, welches sich insbesondere zur Herstellung formstabiler Verpackungseinheiten durch Verkleben eignet, gleichzeitig hohes Dehnungsvermögen, hohe Zug-, Durchstoß-, Weiterreiß- und Naßfestigkeit aufweist sowie licht- und gegebenenfalls aromaundurchlässig ist.

Die gestellte Aufgabe wird erfindungsgemäß durch ein mehrlagiges Verbundmaterial gelöst, gekennzeichnet durch die Kombination der folgenden Merkmale:

a) daß eine textile Innenlage, bestehend aus einem Flächengebilde aus Natur- oder Kunstfasern oder -bändchen mit einer Reißfestigkeit von 1000 bis 2000 N/5 cm, gemessen nach DIN 537,

b) zwei Außenlagen aus Karton und

c) gegebenenfalls Sperrschichten aus Metallfolien oder metallisierten Kunststoff-Folien oder gegen Geruchs- und Aromastoffe weitestgehend undurchlässigen Kunststoffolien vorgesehen sind,

d) welche Lagen bzw. Schichten untereinander durch thermoplastische Haftschichten unter Wärme und Druck vollflächig verbunden sind,

e) wobei der Aufbau der einzelnen Lagen bzw. Schichten zur Innenlage symmetrisch ist.

Ein erfindungsgemäßes Verbundmaterial kann in gleicher Weise, wie eingangs im Zusammenhang mit Verpackungen aus Karton und Wellpappe erläutert, zu kasten- oder quaderförmigen Einheiten verklebt werden. Auch die hohen, eingangs erwähnten Rückstelldrucke, wie sie bei verpackten, komprimierten Gütern auftreten, bewirken keinerlei Verformungen, wie Ausbeulungen, und auch keine Risse an Verpackungseinheiten aus erfindungsgemäßem Verbundmaterial. Die Verpackungseinheiten gewähren hervorragenden Schutz des verpackten Gutes während der Lagerung (Stapelung), bei der Manipulation und beim Transport.

Mit einem erfindungsgemäßen Verbundmaterial ist die Herstellung von Verpackungseinheiten insbesondere für 100 bis 1000 kg komprimierter Materialien, z.B. Faserprodukte, vorteilhaft möglich. Durch die vollflächige Verbindung der Einzellagen sowie durch das integrierte textile Flächengebilde wird die Verpackung feuchtigkeitsdicht und naßfest. Das erfindungsgemäße Verbundmaterial kann in herkömmlicher Weise verklebt werden, so daß die Notwendigkeit der Verwendung von Umreifungsbändern, welche zu Einschnürungen führen, entfällt.

Die in einem erfindungsgemäßen Verbundmaterial enthaltenen Kartonaußenlagen und die textile Innenlage werden zweckmäßig so ausgewählt, daß die Bruchfestigkeit des fertigen Verbundmaterials zumindest 20 % höher ist als jene Bruchfestigkeit, welche sich additiv aus der Bruchfestigkeit jeder einzelnen der beiden Kartonlagen ergibt, und daß der Bruch der textilen Innenlage erst nach weiterer Dehnung von mindestens 10 % über den Bruch der Kartonaußenlagen hinaus erfolgt.

Ein Bruch der einzelnen Karton-Außenlagen erfolgt bereits bei relativ geringen Dehnungswerten von etwa 2 bis 5 %. Auch nach dem Bruch der Kartonlagen schützt die textile Innenlag das verpackte Gut bei Beschädigung der Karton-Außenlagen noch weiter.

Ist eine Verpackungseinheit aus einem erfindungsgemäßen Verbundmaterial mit Sperrschicht(en) hergestellt, wird zusätzlich ein Aromaschutz für sehr lange Zeiträume, beispielsweise ein Jahr lang, sichergestellt.

Schädigungen des verpackten Gutes, die bis zur Vernichtung des verpackten Gutes führen können, werden mit Sicherheit vermieden. Darüber hinaus wird der Verpackungsaufwand für Güter, welche eines Aromaschutzes bedürfen, durch das Wegfallen einer Innenverpackung reduziert.

Die vollflächige Verbindung der einzelnen Lagen des erfindungsgemäßen Verbundmaterials kann beispielsweise durch Kaschieren oder Verkleben mittels thermoplastischer Haftstoffe, reaktiver Kunststoffe, Natur- oder Syntheselatexprodukte, Lacke oder Kleber erfolgen.

Zweckmäßig sind die einzelnen Lagen jeweils über eine thermoplastische Haftschicht, besonders vorteilhaft über eine Polyäthylenschicht mit einem Flächengewicht von 50 g/m², miteinander verbunden.

Bevorzugt sind als Außenlagen Lagen aus Kraftliner-Karton vorgesehen, wobei die Außenlagen insbesondere ein Flächengewicht zwischen 200 und 400 g/m² aufweisen.

Ein Kraftliner-Karton besteht aus Sulfatzellstoff (hergestellt nach dem Kraft-Verfahren) mit Harzbindemittel, er zeichnet sich durch besondere Widerstandsfähigkeit aus.

Eine textile Innenlage mit einem Flächengewicht zwischen 30 und 250 g/m², vorzugsweise zwischen 130 und 170 g/m², hat sich als besonders günstig erwiesen.

Das bevorzugte Verfahren zur Herstellung eines erfindungsgemäßen Verbundmaterials ist dadurch gekennzeichnet, daß die einzelnen Lagen durch Extrusionskaschieren jeweils mittels einer Schicht aus thermoplastischem Kunststoff miteinander verbunden werden.

Die Erfindung wird durch die folgenden Beispiele und die Zeichnung noch näher erläutert.

Beispiel 1:

Es wird ein Verbundmaterial hergestellt, welches sich zur Verpackung von komprimierten Faserballen eignet.

Das Verbundmaterial ist aus den nachstehend angegebenen, aufeinander folgenden Einzellagen aufgebaut:

a) einer ersten Außenlage aus Kraftliner-Karton, hergestellt aus Sulfat-Zellstoff, mit einem Flächengewicht von 300 g/m² und einer Reißfestigkeit in Längsrichtung von 1000 N/5 cm bei einer Bruchdehnung von 3,5 %,

b) einer Innenlage aus einem Polyäthylen-Bändchengewebe mit einem Flächengewicht von 140 g/m² und einer Reißfestigkit in Längsrichtung von 1000 N/5 cm bei einer Bruchdehnung von 33 %, und

c) einer zweiten Außenlage aus Kraftliner-Karton mit denselben Spezifikationen wie die unter a) angegebene Außenlage.

Die drei Lagen sind jeweils vollflächig durch eine Polyäthylenschicht mit einem Flächengewicht von 50 g/m² mittels Extrusionskaschierung miteinander verbunden.

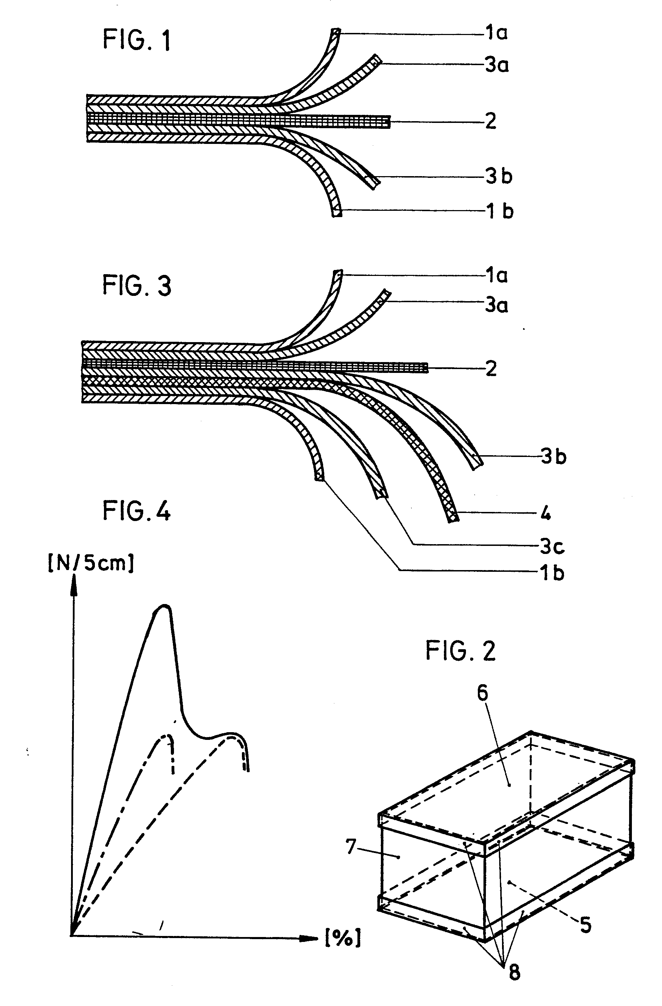

In Fig. 1 ist ein Querschnitt durch dieses Verbundmaterial schematisch dargestellt. Die beiden Außenlagen sind mit 1a und 1b, die Innenlage aus Bändchengewebe ist mit 2 bezeichnet. Die einzelnen Lagen sind jeweils über die Schichten 3a und 3b miteinander verbunden.

Die Auswahl der Lagen 1a, 1b und 2 hinsichtlich ihres Kraft-Dehnungs-Verhaltens wurde so getroffen, daß ein Gesamtverbund entsteht, welcher bei Zugbeanspruchung in Längsrichtung bei einer Dehnung von 3 % zu einem Bruch der Außenlagen 1a und 1b führt, wobei die Bruchlast von 2.400 N/5 cm wesentlich über der Bruchlast für die Außenlagen allein liegt. Nach dem Bruch der Außenlagen 1a und 1b führen erst Beanspruchungen mit Dehnungswerten von über 30 % zur Zerstörung der Innenlage 2.

Das Verbundmaterial wird zu einer quaderförmigen Verpackungseinheit, bestehend aus Boden-, Deckel- und Seitenteil, wie in Fig. 2 schematisch dargestellt, geformt. Bodenteil 5 und Deckelteil 6 werden bei der Verpackung von Faserkabeln in hydraulische Pressen eingelegt. Nach Komprimieren des Verpackungsgutes in vertikaler Richtung wird im komprimierten Zustand das Seitenteil 7 um den Ballen gelegt und mit den umgeschlagenen Randzonen 8 des Bodenteiles 5 und des Deckelteiles 6 verklebt. Nach Aushärtung des Klebers und nach Entlastung der Presse resultiert ein quaderförmig verpackter Faserballen. Dabei zeichnet sich die Verpackungseinheit durch hohe Formbeständigkeit, durch hohe Zug-, Durchstoß-, Weiterreiß- und Naßfestigkeit und durch Feuchtigkeits- sowie Lichtundurchlässigkeit aus. Das verpackte Gut ist vor äußeren mechanischen Beschädigungen während Lagerung, Manipulation und Transport geschützt. Weiters wird gewährleistet, daß bei den komprimierten Faserkabeln durch diese Art der Verpackung ohne Verwendung von Umreifungsbändern keine Knickstellen und Verfilzungen auftreten.

Beispiel 2:

Ein erfindungsgemäßes Verbundmaterial, welches zusätzlich einen Aromaschutz des verpackten Gutes gewährleistet, ist aus folgenden aufeinanderfolgenden Lagen aufgebaut:

a) einer ersten Außenlage aus Kraftliner-Karton, hergestellt aus Sulfat-Zellstoff, mit einem Flächengewicht von 300 g/m$^2$ und einer Reißfestigkeit in Längsrichtung von 1.000 N/5 cm bei einer Bruchdehnung von 3,5 %,

b) einer Innenlage aus einem Polyäthylen-Bändchengewebe mit einem Flächengewicht von 140 g/m$^2$ und einer Reißfestigkeit in Längsrichtung von 1.000 N/5 cm bei einer Bruchdehnung von 33 %,

c) einer weiteren Innenlage aus Aluminiumfolie einer Stärke von 9 mym, und

d) einer zweiten Außenlage mit denselben Spezifikationen wie die erste Außenlage.

Die einzelnen Lagen sind vollflächig jeweils über Polyäthylenschichten mit einem Flächengewicht von 50 g/m$^2$ mittels Extrusionskaschierung miteinander verbunden.

Fig. 3 zeigt schematisch und stark überhöht einen Querschnitt durch ein solches Verbundmaterial. Zwischen den beiden Außenlagen 1a und 1b befinden sich die Innenlage 2 aus Bändchengewebe und als weitere Innenlage die Sperrschicht 4 aus Aluminiumfolie. Zur vollflächigen Verbindung der einzelnen Lagen untereinander sind die Schichten 3a, 3b und 3c vorgesehen.

Die Auswahl der Lagen 1a, 1b und 2 erfolgt nach den gleichen Kriterien wie in Beispiel 1. Die Verpackung von Faserkabeln kann gleichfalls wie in Beispiel 1 dargelegt erfolgen. Neben den beschriebenen Eigenschaften bietet das Verbundmaterial nach Fig. 3 zusätzliche Aromadichtheit, wie sie beispielsweise bei der Verpackung von Acetatfaserkabeln, welche zu Zigarettenfiltern verarbeitet werden sollen, zum Schutz vor geschmacklichen Veränderungen gefordert wird.

In Fig. 4 ist ein Kraft-Dehnungsdiagramm für ein erfindungsgemäßes Verbundmaterial nach Beispiel 1 (voll ausgezogene Kurve), für die beiden Außenlagen 1a und 1b aus Karton allein (strichpunktierte Kurve) und für die textile Innenlage 2 allein (strichliert gezeichnete Kurve) veranschaulicht. Es ist ersichtlich, daß das erfindungsgemäße Verbundmaterial eine weit höhere Festigkeit bis zum Bruch (Reißen) der Außenlagen als die einzelnen Lagen allein aufweist und nach dem Bruch der Außenlagen die Innenlage erst bei einer Dehnung über 30 % reißt.

**Patentansprüche**

1. Mehrlagiges Verbundmaterial zur Verpackung von komprimierten, Rückstelldrucke aufweisenden Gütern, gekennzeichnet durch die Kombination der folgenden Merkmale:

a) daß eine textile Innenlage (2), bestehend aus einem Flächengebilde aus Natur- oder Kunstfasern oder -bändchen mit einer Reißfestigkeit von 1000 bis 2000 N/5 cm, gemessen nach DIN 537,

b) zwei Außenlagen (1a, 1b) aus Karton und

c) gegebenenfalls Sperrschichten (4) aus Metallfolien oder metallisierten Kunststoff-Folien oder gegen Geruchs- und Aromastoffe weitestgehend undurchlässigen Kunststoffolien vorgesehen sind,

d) welche Lagen bzw. Schichten untereinander durch thermoplastische Haftschichten unter Wärme und Druck vollflächig verbunden sind,

e) wobei der Aufbau der einzelnen Lagen bzw. Schichten zur Innenlage symmetrisch ist.

2. Verbundmaterial nach Anspruch 1, dadurch gekennzeichnet, daß als thermoplastische Haftschichten Polyäthylenschichten (3a, 3b; 3c) mit einem Flächengewicht von 50 g/m$^2$ verwendet sind.

3. Verbundmaterial nach einem oder beiden der Ansprüche 1 und 2, dadurch gekennzeichnet, daß als Außenlagen (1a, 1b) Lagen aus Kraftliner-Karton vorgesehen sind.

4. Verbundmaterial nach einem oder mehreren der Ansprüche 1 bis 3, dadurch gekennzeichnet, daß die Außenlagen (1a, 1b) jeweils ein Flächengewicht zwischen 200 und 400 g/m$^2$

aufweisen.

5. Verbundmaterial nach einem oder mehreren der Ansprüche 1 bis 4, dadurch gekennzeichnet, daß die textile Innenlage (2) ein Flächengewicht zwischen 30 und 250 g/m², vorzugsweise zwischen 130 und 170 g/m², aufweist.

6. Verfahren zur Herstellung eines Verbundmaterials nach einem oder mehreren der Ansprüche 1 bis 5, dadurch gekennzeichnet, daß die einzelnen Lagen (1a, 1b, 2; 4) durch Extrusionskaschieren jeweils mittels einer Schicht (3a, 3b; 3c) aus thermoplastischem Haftstoff miteinander verbunden werden.

0268576

**FIG. 1**

— 1a
— 3a
— 2
— 3b
— 1b

**FIG. 3**

— 1a
— 3a
— 2
— 3b
— 4
— 3c
— 1b

**FIG. 4**

[N/5cm]

[%]

**FIG. 2**

6
7
5
8